# EUROPEAN PATENT APPLICATION

(11) **EP 1 940 105 A1**
(43) Date of publication of application: **02.07.2008**
(21) Application number: 06292068.1
(22) Date of filing: 27.12.2006
(51) Int. Cl.: H04L 29/06

(54) **Controlling quality of service in communications networks**

(71) Applicant: France Télécom, 75015 Paris (FR)
(72) Inventor: Jain, Menuka, 75015 Paris (FR)
(74) Representative: Spaargaren, Jerome

(57) **Abstract**

The invention relates to a system and methods for controlling Quality of Service (QoS) in communications sessions involving transfer of Session Initiation Protocol (SIP) session control signalling information relating to media data to be communicated between endpoints. A QoS requestor node may be an endpoint device or a network node acting on behalf of an endpoint. A QoS requestor node may require QoS control for a particular communication session between endpoints and can request QoS services from the underlying network using SIP. The QoS request can be received by a QoS provider node which controls access to the network and mandates that QoS services are requested before any network resources are used or allocated. The QoS provider node can then allocate a level of QoS using SIP, and communication of media data at the allocated QoS may then proceed between the two endpoints.

## Description

### Field of the Invention

The present invention relates to methods for controlling Quality of Service in communications networks. In particular, the present invention relates to a system and methods for controlling Quality of Service (QoS) in communications sessions including the communication of media data between two endpoints.

### Background of the Invention

Convergence of fixed and mobile telephony networks has propelled usage of packet-switched networks for services that have traditionally been delivered over circuit-switched networks. Of all packet network technologies, packet networks based on Internet Protocol (IP) transport have dominated the delivery of multi-media data that are either call based services (for example voice call, video call, conference calling, Push-to-talk, etc.) or non-call based services (for example Presence, Instant Messaging, multi-media messaging, etc.).

Many services require defined QoS for media transport, for example minimum bandwidth, latency, and error rates. Different services may require different QoS parameters depending on the requirements of the service, for example user preference, device capabilities or limitations, operator policy and network capacity.

QoS services can be implicitly or explicitly requested by an end-device that participates in the service but granted, controlled and monitored by a transport operator, network operator, service provider or a combination thereof.

The end objectives of QoS services remain mostly aligned to the broad requirement of providing dynamic and differentiated services with predictable network transport quality. End-to-End QoS reservation and control in various different QoS models have common control functionalities:
a) An end device identifies or invokes a service request that includes a direct or indirect definition of required QoS parameters.
b) An end device or network node requests QoS reservation from the underlying transport plane. This may be after the authorisation of media session and QoS parameter(s) according to the type of service, operator and/or network.
c) Network-to-network requests are made for QoS reservation in relation to media flows traversing multiple network domains.

Although different architectures have mostly common QoS reservation and control requirements the protocols and mechanisms chosen to implement QoS control are quite different. Since all such architectures also require some form of mapping and attachment with call and non-call session based signalling, providing QoS services can be complicated and costly due to the requirement for all nodes and endpoints to support various different protocols and mechanisms.

It would thus be desirable to provide QoS services in communication networks with reduced complexity and cost.

### Summary of the Invention

In accordance with a first aspect of the present invention, there is provided a system for controlling Quality of Service (QoS) in a communications session between two endpoints, said communications session comprising transfer of Session Initiation Protocol (SIP) session control signalling information, said SIP session control signalling information relating to media data to be communicated between said two endpoints, said system including a QoS requestor node responsible for requesting QoS services for one of said two endpoints in a communications network through which said media data is to be communicated, said QoS requestor node being arranged to transmit QoS information using transfer of SIP signalling information, and receive using transfer of SIP signalling information, information relating to an allocated QoS level for said media data to be communicated between said two endpoints, a QoS provider node responsible for controlling QoS services in said communications network, said QoS provider node being arranged to receive QoS information using transfer of SIP signalling information, in response to said reception of said transmitted QoS information, allocate a level of QoS to said media data to be communicated between said two endpoints, and transmit information relating to said allocated QoS level from said QoS provider node using transfer of SIP signalling information.

Hence by use of the present invention, QoS services can be delivered using transfer of SIP signalling information. A QoS requestor node may be an endpoint device or a network node acting on behalf of an endpoint. A QoS requestor node may require QoS control for a particular communication session between two endpoints and can request QoS services from the underlying network using SIP. The QoS request can be received by a QoS provider node which controls access to the network and mandates that QoS services are requested before any network resources are used or allocated. The QoS provider node can then allocate a level of QoS, using SIP, in response to the request from the QoS requestor node. Once QoS is allocated, communication of media data at the allocated QoS may then proceed between the two endpoints.

SIP based QoS control is like a SIP session, but it can be complete in itself with the QoS session being independent of the call session. Thus a SIP dialog for QoS can be separate from a SIP dialog for session control, such as call setup signalling.

Apart from session-like QoS control by transfer of SIP signalling , SIP can be utilised for non-session signalling interactions between nodes responsible for handling QoS - for example exchange of capability information, details of total resources available, status of utilisation are some cases where multiplexing of information is required, and can be communicated using SIP.

When SIP is used for QoS control, QoS details and media parameters can be easily rendered from call session signalling to QoS session. Using SIP for QoS control will lower costs by lowering the level of intelligence required in endpoint devices and network nodes, for example reducing the complexity of extracting necessary QoS information from call session and encoding it one or more different protocols.

Use of SIP also reduces the need of processing resources such as Central Processing Unit (CPU) and memory at call servers. For example, in session setup in the Internet Protocol Multimedia Subsystem (INIS) architecture, instead of extracting session details required for QoS from SIP session control signalling and mapping to the Diameter protocol, the details in the form of Session Description Protocol (SDP) and header values can be directly passed to an entity responsible for providing QoS reservation and policy control such as a Policy Decision Function (PDF) using a further SIP dialog.

SIP can also co-work with other protocols, depending on existing network architecture. For example the present invention can co-work with other protocols such as Common Open Policy Service (COPS), Megaco, Diameter and Simple Network Management Protocol (SNMP).

Another advantage of using SIP is that it operates independently of the underlying transport, compared to protocols used in current QoS architectures that can run either on the Transmission Control Protocol (TCP) or on the User Datagram Protocol (UDP). As an example the Diameter protocol only runs on TCP, which limits its applicability. The present invention can also be used in packet networks based on Asynchronous Transfer Mode (ATM) technology.

A further advantage of using SIP is its wide applicability as a signalling protocol for call signalling as well as non-call signalling to create a variety of services. All SIP servers can benefit from SIP based QoS control.

Preferably, the QoS services are triggered, in response to receipt of QoS information from said QoS requestor node, using transfer of SIP signalling information. Hence the present invention allows SIP mechanisms to be used to initiate QoS services.

Preferably, the transfer of SIP signalling information comprises transmitting QoS signalling information to the QoS provider node and call session signalling information to a second, different location. Hence QoS specific signalling information can be passed for processing on to a node responsible for controlling QoS services whilst session control signalling information not specifically concerned with QoS services can be passed for processing on to a node responsible for call signalling or such like.

The allocated QoS level may comprise one or more of a minimum bandwidth, a minimum latency, and a minimum error rate, for said media data to be communicated between said two endpoints. Hence various QoS parameters can be requested and allocated for communication between endpoints. Which QoS level is allocated may depend on a number of factors, for example the type of service being requested, the type of media data to be communicated, the level of QoS that one or more of the endpoints are subscribed to, etc.

Either, or both, of said two endpoints may comprise one or more of a mobile telephone, a personal digital assistant, an analogue telephone, a SIP server, and a personal computer. Hence media data may be communicated between wide varieties of endpoint devices.

Preferably, the system is further arranged to, prior to the step of providing QoS information to said QoS provider node, register one or more of said two endpoints and/or said QoS requestor node with said QoS provider node. Hence a QoS requestor node can make prior arrangements to register with a QoS provider node. This ensures that a QoS requestor node knows what to do when it receives QoS signalling information, i.e. how to process the QoS signalling information and where to pass it on to in the communications network.

Preferably, the communications network supports Internet Protocol (IP) based communication.

The communications network may comprise an Internet Protocol Multimedia Subsystem (IMS) architecture. In terms of an IMS architecture, the QoS provider node may comprise a Policy Decision Function (PDF) and the QoS requestor node may comprise a Control Session Control Function (CSCF).

In accordance with a second aspect of the present invention, there is provided a method for controlling Quality of Service (QoS) in a communications session between two endpoints, said communications session comprising transfer of Session Initiation Protocol (SIP) session control signalling information, said SIP session control signalling information relating to media data to be communicated between said two endpoints, said method comprising the steps of receiving QoS information at a QoS provider node using transfer of SIP signalling information, said QoS provider node being responsible for controlling QoS services in a communications network through which said media data is to be communicated, and in response to receiving said QoS information at said QoS provider node, allocating a level of QoS for said media data to be communicated between said two endpoints.

Hence, the present invention provides for the control of QoS services using the transfer of SIP signalling information via a QoS provider node.

Preferably, the received QoS information comprises a QoS authorisation request, said QoS authorisation request requesting authorisation of network resources for the communication of said media data between said two endpoints, said method further comprising the step of, in response to receiving said QoS authorisation request at said QoS provider node, transmitting a QoS authorisation response from said QoS provider node indicating whether said QoS authorisation request was successful.

Hence, requesting QoS services may involve an authorisation stage where authorisation for network resources for the communication of media data between two endpoints with QoS is requested at a QoS provider node. This may involve determining whether the QoS services requested are in accordance with the policy of one or more network operators.

Preferably, the QoS authorisation request comprises a SIP 'INVITE' message or a SIP 'UPDATE' message and said QoS authorisation response comprises a SIP 'OK' message. Hence existing SIP message formats designed for call setup signalling can also be used for QoS signalling purposes, in particular for authorisation of QoS services.

Preferably, the received QoS information comprises a QoS reservation request, said QoS reservation request requesting reservation of network resources at said allocated QoS level for the communication of said media data between said two endpoints, said method further comprising the step of, in response to receiving said QoS reservation request at said QoS provider node, transmitting a QoS reservation response from said QoS provider node indicating whether said QoS reservation request was successful.

Hence, requesting QoS services may also involve a reservation stage where network resources for the communication of media data between two endpoints with QoS are reserved. This may involve determining whether sufficient resources are available. If sufficient resources are available, the reservation request may be granted and the network resources can be reserved for the requestor.

Preferably, the QoS reservation request comprises a SIP 'INVITE' message or a SIP 'UPDATE' message and said QoS reservation response comprises a SIP 'OK' message. Hence existing SIP message formats designed for session control signalling can also be used for QoS signalling purposes, in particular for reservation of QoS services.

Preferably, the received QoS information comprises a QoS enable request, said QoS enable request requesting that network resources at said allocated QoS level for the communication of said media data between said two endpoints are enabled, said method further comprising the step of in response to receiving said QoS enable request at said QoS provider node, transmitting a QoS enable response from said QoS provider node indicating whether said QoS enable request was successful.

Hence, requesting QoS may involve an enablement stage, sometimes referred to as a commit stage, where the authorised and reserved network resources are enabled, whereby communication of media data between the two endpoints with QoS may begin. The enablement stage is the act of finalising the allocated network resources is set up to allow the actual flow of media data between endpoints with QoS.

Preferably, the QoS enable request comprises a SIP 'INVITE' message or a SIP 'UPDATE' message and said QoS enable response comprises a SIP 'OK' message. Hence, existing SIP message formats designed for session control signalling can also be used for QoS signalling purposes, in particular for enablement of QoS services.

Preferably, the QoS authorisation request, said QoS reservation request and said QoS enable request comprise a single SIP 'INVITE' or SIP 'UPDATE' message and said QoS authorisation response, said QoS reservation response and said QoS enable response comprise a single SIP 'OK' message. Hence existing SIP message formats designed for session control signalling can also be used for QoS signalling purposes, in particular for combined authorisation, reservation and enablement of QoS services.

Preferably, one or more of said SIP messages comprise Session Description Protocol (SDP) information including at least part of said QoS information. The present invention can operate with any type of media as SIP messages containing SDP information can carry description of any media type.

Preferably, the received QoS information comprises header information relating to said QoS services, which even if ignored by one or more SIP call signalling nodes in the network, are allowed to pass through as unknown headers. Hence, QoS specific headers can be created to carry QoS specific usage parameters. As SIP is extensible, it can accommodate new header constructs whilst keeping the current SIP methods and message semantics as they are. SIP call signalling nodes may not understand the QoS headers and can allow them to pass through as unknown headers. This can help to reduce the impact and cost of implementing QoS functionality. The QoS specific SIP header fields may be combined into existing SIP session control signalling message headers, or can be additional to such headers.

Preferably, the QoS authorisation, reservation and enable requests comprise said header information.

Preferably, the header information relates to said allocated QoS level.

Preferably, the method further comprises the step of transmitting QoS information using transfer of SIP signalling information from said QoS provider node to a second QoS provider node further in the network. Hence more than one QoS provider node may be involved in the control of QoS services and the QoS provider nodes may transfer QoS information between them using SIP.

Preferably, the further communications node is located in a further communications network in different administrative control through which said media data is to be communicated, said further QoS provider node being responsible for controlling QoS services in said further communications network. Hence QoS provider nodes in different communications networks may provide QoS information to each other using SIP.

Preferably, the method further comprises the step of transmitting QoS information using transfer of SIP signalling information from said QoS provider node to a QoS enforcement node in said network, said QoS enforcement node being responsible for enforcing QoS services in said communications network. Hence SIP can also be used to transfer QoS information from QoS provider nodes to QoS enforcement nodes which can further help to reduce the amount of interchange of parameters and conversion between different protocols.

Preferably, the method further comprises the step of at said QoS enforcement node monitoring media data communicated between said two endpoints according to said allocated QoS level. Hence, any use of network resources for communication between two endpoints which breaches a level of QoS allocated to the communication can be detected and dealt with accordingly. This helps to ensure that users who have been granted network resources never exceed the resource usage that has been allocated to them.

Preferably, the communications network comprises an access network and said further communications network comprises a core network connecting a plurality of access networks, said access network being connected via one or more gateways to said core network. Hence, communication with QoS between an endpoint in one access network and an endpoint in another access network may proceed via a core network and one or more gateways connecting the networks together.

Preferably, the communications network and/or said further communications network comprise one or more of the Internet, a PSTN, and a mobile telephony communications network. Hence QoS services may be provided over a variety of different types of network.

In accordance with a third aspect of the present invention, there is provided a method for controlling Quality of Service (QoS) in a communications session between two endpoints, said communications session comprising transfer of Session Initiation Protocol (SIP) session control signalling information, said SIP session control signalling information relating to media data to be communicated between said two endpoints, said method comprising the step of transmitting QoS information from a QoS requestor node using transfer of SIP signalling information, said QoS requestor node being responsible for requesting QoS services for one of said two endpoints in a communications network through which said media data is to be communicated, and receiving at said QoS requestor node using transfer of SIP signalling information, information relating to a level of QoS allocated for said media data to be communicated between said two endpoints.

Hence, the present invention provides for the control of QoS services using the transfer of SIP signalling information via a QoS requestor node.

Preferably, the QoS services are triggered in response to said transmittal of QoS information from said QoS requestor node using transfer of SIP signalling information. Hence the present invention allows existing support for SIP mechanisms to be used to initialise QoS services.

Preferably, the transfer of SIP signalling information comprises transmitting QoS signalling information from said QoS requestor node to first location and session control signalling information from said QoS requestor node to a second, different location. Hence, QoS specific signalling information can be passed for processing by a QoS requestor node on to a node responsible for controlling QoS services. Signalling information not specifically concerned with QoS services can be passed for processing by a QoS requestor node on to a node responsible for call signalling or such like.

Preferably, the transmitted QoS information comprises a QoS authorisation request, the QoS authorisation request requesting authorisation of network resources for the communication of media data between said two endpoints, the method further comprising the step of receiving at said QoS requestor node using transfer of SIP signalling information, a QoS authorisation response indicating whether said QoS authorisation request was successful. Hence, requesting QoS services may involve an authorisation stage where authorisation for network resources for the communication of media data between two endpoints with QoS is requested by a QoS requestor node.

Preferably, the QoS authorisation request comprises a SIP 'INVITE' message or a SIP 'UPDATE' message and said QoS authorisation response comprises a SIP 'OK' message. Hence existing SIP message formats designed for session control signalling can also be used for QoS signalling purposes, in particular for authorisation of QoS services.

Preferably, the transmitted QoS information comprises a QoS reservation request, said QoS reservation request requesting reservation of network resources for the communication of said media data between said two endpoints, said method further comprising the step of receiving at said QoS requestor node using transfer of SIP signalling information, a QoS reservation response indicating whether said QoS reservation request was successful. Hence, requesting QoS services from a QoS requestor node may also involve a reservation stage where network resources for the communication of media data between two endpoints with QoS are reserved.

Preferably, the QoS reservation request comprises a SIP 'INVITE' message or a SIP 'UPDATE' message and said QoS reservation response comprises a SIP 'OK' message. Hence existing SIP message formats designed for session control signalling can also be used for QoS signalling purposes, in particular for reservation of QoS services.

Preferably, the transmitted QoS information comprises a QoS enable request, said QoS enable request requesting that network resources for the communication of said media data between said two endpoints at said allocated QoS level are enabled, said method further comprising the step of receiving at said QoS requestor node using transfer of SIP signalling information, a QoS enable response indicating whether said QoS enable request was successful. Hence, requesting QoS may involve an enablement stage, sometimes referred to as a commit stage, where the authorised and reserved network resources are enabled.

Preferably, the QoS enable request comprises a SIP 'INVITE' message or a SIP 'UPDATE' message and said QoS enable response comprises a SIP 'OK' message. Hence, existing SIP message formats designed for session control signalling can also be used for QoS signalling purposes, in particular for enablement of QoS services.

Preferably, the QoS authorisation request, said QoS reservation request and said QoS enable request comprise a single SIP 'INVITE' message and said QoS authorisation response, said QoS reservation response and said QoS enable response comprise a single SIP 'OK' message. Hence existing SIP message formats designed for call setup signalling can also be used for QoS signalling purposes, in particular for combined authorisation, reservation and enablement of QoS services.

Preferably, one or more of said SIP messages comprise SDP data including at least part of said QoS information. The present invention can operate with any type of media as SIP messages containing SDP information can carry description of any media type.

Preferably, the transmitted QoS information comprises header information relating to said QoS services which may be ignored by one or more SIP signalling nodes. Hence QoS specific headers can be created to carry QoS specific usage parameters. SIP call signalling nodes may not understand the QoS headers and can allow them to pass through as unknown headers. The QoS specific SIP header fields may be combined into existing SIP signalling messages, or can be additional to call signalling headers.

Preferably, the QoS authorisation, reservation and enable requests comprise said header information.

Preferably, the header information relates to said allocated QoS level.

Preferably, the QoS requestor node is a network node remote to said two endpoints, or said QoS requestor node comprises one of said two endpoints. Hence in different embodiments, QoS requests may originate from an endpoint or from a distinct node in the network.

Further aspects of the present invention provide apparatus and computer software to perform the methods of the second and third aspects of the present invention.

Further features and advantages of the invention will become apparent from the following description of preferred embodiments of the invention, given by way of example only, which is made with reference to the accompanying drawings.

### Brief Description of the Drawings

Figure 1 shows a system diagram according to an embodiment of the present invention.
Figure 2 shows SIP message flows between a QoS requestor node and a QoS provider node according to an embodiment of the present invention.
Figures 3 to 5 show example push model SIP message flows according to an embodiment of the present invention.
Figure 6 shows pull model SIP message flows according to an embodiment of the present invention.
Figure 7 shows an application server architecture view according to an embodiment of the present invention.

### Detailed Description of the Invention

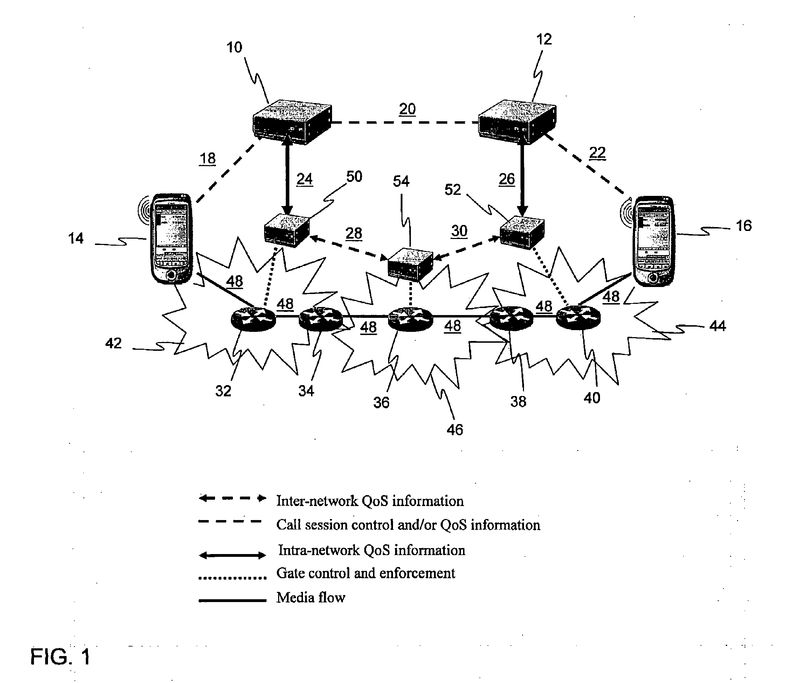

Figure 1 shows a system diagram according to an embodiment of the present invention. An endpoint 14 located in one communications network 42, wishes to communicate with another endpoint 16 located in another communications network 44. In this particular example, networks 42 and 44 are access networks in which endpoints 14 and 16 connect to their respective service providers. Access networks 42 and 44 are connected by a core network 46 via gateways 34 and 38.

Elements 50, 52 and 54 are QoS provider nodes, each responsible for controlling QoS services on behalf of endpoints 14 and 16 respectively and provide network transport and policy control functionality. Each of the access networks 42, 44, and the core network 46 contain QoS provider nodes 50, 52 and 54 respectively, which are responsible for controlling QoS services in each network.

QoS provider nodes control functions that require users to get the resources allocated before the actual use of the resources. QoS provider nodes may have functions "verifying" that end-devices that were allocated QoS services are the only users and these functions may also "monitor" that the use is within limits defined at the time of allocation. QoS provider nodes may include control functions that decide users of network resources, the type of resources that are required for a particular service and the values of QoS parameters for each usage. QoS provider nodes may include policy control functions which "enforce" QoS policy by filtering resource usage requests prior to reservation of network resources.

Each network 42, 44, 46 also contains a QoS enforcement node responsible for enforcing QoS services in each network. The QoS enforcement nodes are edge devices or routers that monitor media flows and enforce allocated QoS levels. QoS enforcement nodes monitor the network to ensure that only those given admission can use the resources.

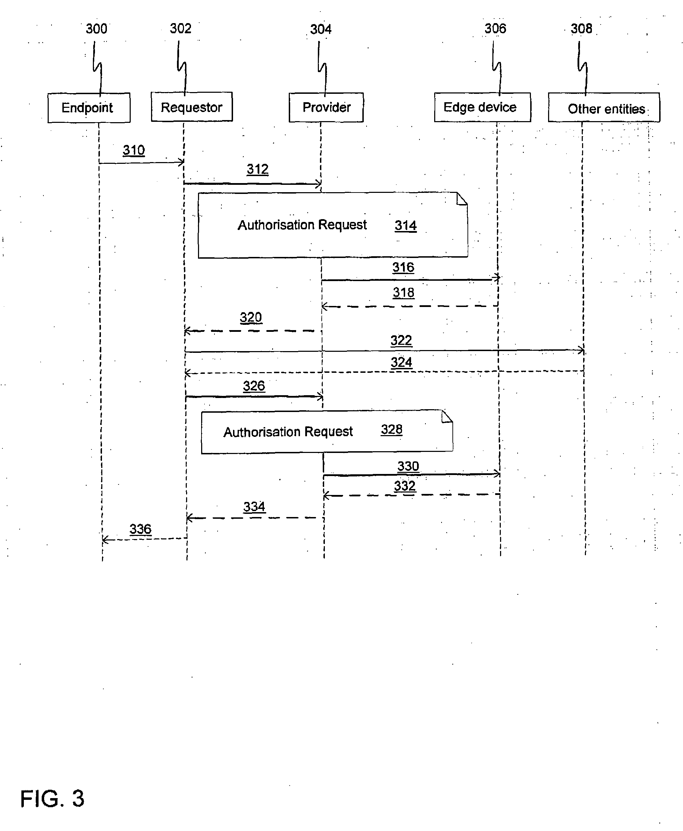

A QoS enforcement node may be a requestor node for QoS services for a pull model and a provider node for QoS services for a push model. Push and pull models are discussed below in more detail with reference to Figures 3 to 5 and 6 respectively.

Elements 10 and 12 are SIP servers which receive SIP call signalling information from endpoints 14 and 16 and perform the actions of signalling analysis, routeing and/or signalling termination via call signalling path 18, 20, 22. SIP servers 10, 12 are also responsible for initiating QoS service requests to QoS providers 50 and 52 on behalf of endpoints 14, 16. Endpoints 14, 16 may or may not have included QoS service request parameters within SIP call signalling information, i.e. a QoS service request may be implicit within the call setup sequence and SIP servers 10, 12 may construct QoS service requests from the session signalling they receive. SIP server 10, may transmit call signalling information to SIP server 12 and also transmit QoS service requests to QoS provider node 50.

When QoS provider node 50 receives a QoS service request from SIP server 10, QoS services are triggered and QoS provider node 50 allocates a level of QoS for communication between the two endpoints. QoS provider node 50 also communicates with QoS enforcement node 32 and QoS provider node 54, which in turn communicates with QoS provider node 52 and QoS enforcement node 36 and also QoS enforcement node 40 to provide end-to-end QoS services.

It can be seen that in this scenario QoS provider node 54 becomes a requestor of QoS services while QoS Enforcement node 36 becomes a provider of QoS services.

Once the call is setup via call signalling path 18, 20, 22, media data can be communicated between the two endpoints via media path 48. Transfer of media data along media path 48 can be monitored by QoS enforcement nodes 32, 36 and 40. QoS enforcement nodes 32, 36 and 40 in conjunction with QoS provider nodes 50, 54, 52 can ensure that the communication of media data accords with the allocated QoS level.

The present invention thus proposes to use SIP for communication between SIP servers 10 and QoS provider node 50. SIP is also proposed for communication between QoS provider node 50 and other QoS provider nodes 54, 52.in adjacent network domains and beyond. In addition, SIP is also proposed between QoS provider 50, 43 and 52 and QoS enforcement nodes 32, 36 and 40.

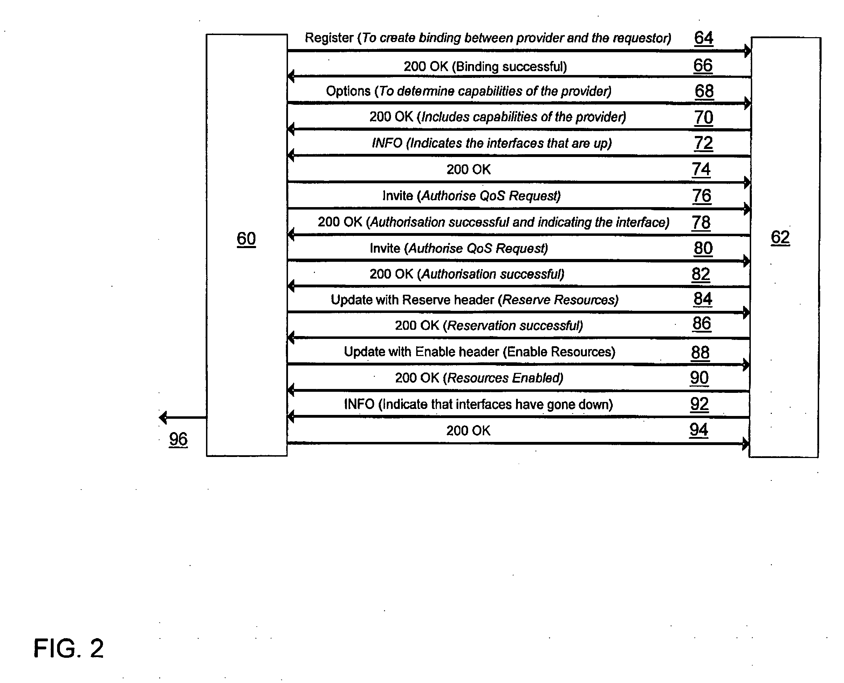

Figure 2 shows SIP message flows between a QoS requestor node 60 and a QoS provider node 62 according to an embodiment of the present invention.

Prior to the provision of QoS services, QoS requestor node 60 can register with QoS provider node 62. This may be achieved by QoS requestor node 60 sending a SIP 'REGISTER' message to QoS provider node 62, which responds with a SIP '200 OK' message in response. SIP 'REGISTER' messages are proposed as they allow dynamic attachment of QoS requestor(s) with QoS provider(s). This exchange creates a binding between the QoS requestor node and the controlling QoS provider node 62 so that the former knows to contact the latter when QoS services are required.

It is not mandatory for a QoS requestor node to register with a QoS provider node, but in general those QoS requestor nodes which are involved in QoS sessions for multiple media flows for different users shall use the registration mechanism. QoS requestor nodes may register with QoS provider nodes and, a QoS provider node may un-register with a QoS requestor node at any time.

A QoS requestor node attached to multiple providers can perform load balancing of QoS requests based on cost, QoS level, or other factors. However, for this scheme to work, the requestor must know the capacity and capability details of all providers to which it is attached. The invention proposes that a QoS requestor node may use one or more SIP 'OPTIONS' messages 68 to acquire the capability and capacity details of a controlling QoS provider node with details being returned in a SIP '200 OK' as shown in Figure 2. The details may be included in header fields.

Examples of details which can be retrieved using SIP 'OPTIONS' messages include the following:
- Type of services - the type of services supported by the provider can be returned. The services may for example be Conversational, Streaming,
   Interactive and/or Data services.
- Number of calls/media streams - the total number of calls that can be supported. The QoS provider node may also selectively advertise the capacity based on operator or network policy, e.g. a QoS provider node may disclose details of bandwidth capacity to a QoS requestor node limiting the aggregate bandwidth available for reservation for that particular QoS requestor node.
- Total bandwidth of the QoS provider node - the total bandwidth that the QoS provider node can budget for all calls that the underlying network can handle.
- Total bandwidth available - total bandwidth currently available to a QoS requestor node for more reservations.
- Number of calls running - this could indicate the numbers of calls that are currently running under the control of the QoS provider node.
- Resources reserved - this could indicate the resources that are already reserved for calls.
- Resources available - this could indicate the resources that are available for new sessions.

Use of SIP 'OPTIONS' messages can be further extended in the future as and when needed to support the need of additional capabilities. Although SIP Universal Resource Indicator (URI) of a QoS requestor node is its identity, SIP header extension can define the type of QoS requestor node enabling categorisation of different QoS requestor nodes.

The invention also proposes that QoS provider nodes can use SIP 'INFO' messages to notify QoS requestor nodes about the availability and unavailability of IP interfaces nodes in the underlying IP transport network. Figure 2 shows such a SIP 'INFO' message 72 transmitted from QoS provider node 62 to QoS requestor node 60 with confirmation transmitted back in response 74.

If a particular IP interface or node handling flow of multiple media streams goes down, a QoS provider node can terminate all the associated sessions and inform the relevant QoS requestor node(s) using SIP 'INFO' messaging. This reduces the amount of signalling passing between QoS provider and QoS requestor nodes as only one INFO message can indicate the status of many calls that have been going through that interface. QoS requestor nodes are aware of the mapping between a session and the interface on which the call is running as interface details are returned at the time of QoS session setup.

The invention further proposes the use of SIP 'SUBSCRIBE' and SIP 'NOTIFY' messages. These allow asynchronous information sharing from QoS provider nodes to QoS requestor nodes. A QoS requestor may use SIP 'SUBSCRIBE' messages to subscribe for some events that indicate state change in one or more QoS provider nodes. QoS provider nodes may generate SIP 'NOTIFY' messages in response to SIP 'SUBSCRIBE' events.

It should be noted that SIP 'REGISTER,' 'OPTIONS,' 'INFO,' 'SUBSCRIBE' and 'NOTIFY' messages described above are non-session based messages and do not create a QoS session between a QoS requestor node and a QoS provider node. These messages allow information exchange between QoS requestor and QoS provider nodes that may affect all the sessions or at least one QoS session.

The invention proposes the use of SIP 'INVITE,' 'UPDATE,' and 'BYE' messages to create and manage QoS sessions. SIP header extensions can be defined to convey QoS reservation actions within the QoS session dialog. This allows for two staged reservation and commit as well as one staged reservation and commit. Such SIP header extensions allow for further extension for new QoS action types.

In this embodiment of the invention, SDP parameters in the SIP dialog carry a description of QoS parameters. This may involve a direct description of the intended media data communication, sometimes called a media flow, from which a QoS provider node can understand and derive QoS parameters from, or it includes a direct specification of QoS parameters. Media parameters such as source IP port in SDP help the transport network to identify the media stream.

In Figure 2, QoS requestor node 60 uses a SIP 'INVITE' message 76 to request QoS services from QoS provider node 62 for QoS authorisation of downstream media flow. The QoS requestor node may also indicate the type of model in SIP 'INVITE' request i.e. whether it is push model or pull model. Push and Pull models respectively are described in more detail below for European Telecommunications Standard Institute (ETSI) and 3rd Generation Partnership Project (3GPP) applications to the IMS architecture.

Once it receives the QoS services request, QoS provider node 62 determines whether to allow or reject the QoS request based on QoS policies, network operator policies, requested QoS user profiles and/or type of access network. If QoS provider node 62 decides to allow the request, it instantiates a QoS session and responds by transmitting a SIP '200 OK' message back to QoS requestor node 60 indicating that the authorisation request was successful and an interface to be used.

If authorisation fails, an error message can be transmitted by QoS provider node 62 back to QoS requestor node 60 indicating the reason for failure.

Requestor node 60 may indicate a type of QoS model to QoS provider node 62 by adding QoS information to a QoS specific header of a SIP 'INVITE' message. The header may for example be a QoS model type header and could indicate whether a push or pull model is being requested.

Requestor node 60 may also indicate a type of service to QoS provider node 62 by adding QoS information to a QoS specific header of a SIP 'INVITE' message. The type of service may indicate whether the service is a conversational, streaming, interactive, or background service, etc. If the type of service is not indicated, then QoS provider node may automatically determine the type of service from the authorisation request message.

A second SIP 'INVITE' message can be sent from QoS requestor node 60 to QoS provider node 62 for the same session which also can be treated as a QoS authorisation request. However, this request is for upstream media flow. QoS provider node 62 treats this request in a similar manner to the first request for the downstream media flow.

It should be noted that a single SIP 'INVITE' request may be used to authorise both downstream and upstream media flows.

Requestor node 60 may send user profiles, service profiles of either the session originator or terminator (this can depend on which is subscribed to which network) to the QoS provider node 62. This information can be appended to either the first or second SIP 'INVITE' messages.

To reserve the authorised network resources QoS requestor node 60 may transmit a SIP 'UPDATE' message 84 to QoS provider node 62. SIP 'UPDATE' message 84 may contain QoS information in a QoS specific header requesting reservation of the resources. This can be used to reserve resources either during a call or reservation can be made in advance. Advance reservation is useful for services where a conference has to be carried out at a particular time. QoS provider node 62 can respond by transmitting a SIP '200 OK' message 86 back to QoS requestor node 60.

To enable the authorised and reserved network resource, QoS requestor node 60 may transmit a further SIP 'UPDATE' message 88 to QoS provider node 62. As mentioned above, this allows flow of media data between the endpoints. SIP 'UPDATE' message 88 may contain QoS information in a QoS specific header requesting that QoS provider node enables the relevant gates for media data flow to begin. QoS Provider node checks whether the request is in accordance with the policy of the operator and if so, arranges for the resources to be enabled and responds to QoS requestor node 60 with a SIP '200 OK' message.

A SIP 'BYE' message 96 can be used to terminate a QoS session as shown by step 96 in Figure 2. This message may be sent either by QoS requestor node 60 or QoS provider node 62. In both case, the circumstances the QoS provider node would release the relevant resources.

If, during a session, an IP interface or node handling media flow goes down, QoS provider node 62 may send a SIP 'INFO' message 92 to QoS requestor node 60. QoS requestor node 60 can respond with a SIP '200 OK' message 94. This exchange is shown at the bottom of Figure 2 as elements 92 and 94, but could occur at any time during a session.

Some of the above SIP messages may contain SDP information and some may not. If QoS provider node 62 receives a SIP message without SDP information when SDP information is expected, QoS provider node 62 may return an error message, for example a SIP '4xx' message, as required functionality such a message cannot be carried out in the absence of the SDP information.

The above described authorisation, reservation and enable stages may be carried out in a single stage. In this case, QoS requestor node 60 could send one SIP 'INVITE' message containing QoS information in one or more QoS specific headers requesting authorisation, reservation and enable or resources. This can be regarded by QoS provider node 62 as a single request for authorisation, reservation and enabling of gates. Alternatively, a SIP 'UPDATE' message could be used instead of a SIP 'INVITE' message, if a session has already been established using a SIP 'INVITE' message.

The proposed usage of SIP methods for QoS control in IMS network architecture is detailed below. A QoS session flow based on SIP methods and proprietary headers is then described.

The present invention can be applied to IMS architecture. Drawing analogy with Figure 1 and the network view of IMS, QoS requestor node 10 is a Proxy-Call Session control Function (P-CSCF) in the IMS, i.e. the entity responsible for requesting QoS services. QoS provider node 50 is a Policy Decision Function (PDF) in the IMS, i.e. the entity responsible for providing QoS control. QoS enforcement node 32 is a Policy Enforcement Point (PEP) in IMS.

A PDF connects with a Border Controller Function (BCF) in an adjacent IP network domain, the domain through which media data passes through for end-to-end media connection. The node 54 is a BCF in IMS. PDF to BCF and BCF to PDF is a network-network interface. This invention proposes that SIP is used between P-CSCF and PDF (the Gq interface in IMS) entities and between PDF and BCF entities (the Gu interface in IMS). Further, the present invention proposes that SIP is used between PDF and PEP entities (the Go interface). Depending upon network operator requirements, there could be combination of various protocols at different interfaces. For example, purely SIP could be used for the Gq interface and H.248/COPS/Diameter/SNMP could be used for the Go interface.

PDF and intra-domain call servers (P-CSCF, streaming servers and other call servers) may be made to register with each other before QoS sessions can be established. Requiring P-CSCFs to register with PDFs allows dynamic binding and easy scaling of the domain. This proposal allows many-to-many bindings to be created between requestors and providers. A QoS provider node may also return SIP URIs or other contact details for other QoS provider nodes that a QoS requestor node may contact. QoS provider nodes can use such a mechanism to implement redundancy of QoS provider nodes.

Figures 3 to 6 show example push model SIP message flows according to an embodiment of the present invention. This approach is suitable for the ETSI IMS push model where SIP is used as the call session protocol. Here, a P-CSCF could act as a QoS requestor node and a Resource Admission Control Subsystem (RACS) could act as a QoS provider node. In this approach, the QoS provider node could perform authorisation and reservation depending upon the policies of the relevant network operator. Alternatively or in addition, it may perform authorisation and reservation depending on service profile, user profile, and type of access network, if such information is supplied by a QoS requestor node. Depending upon the type of the call, the QoS provider node ensures that guaranteed QoS is provided in the operator's network. In addition, an edge device could act as a provider of QoS services and a provider could acts as a requestor of QoS services.

Figure 3 includes a source endpoint 300 with requestor 302 and provider 304. Edge device 306 lies at the edge of the network that endpoint 300 is located in and other entities 308 are the corresponding entities in other networks which contain a destination endpoint which source endpoint 300 wishes to communicate with.

The QoS authorisation process begins in Figure 3, when endpoint 300 transmits a SIP 'INVITE' message 310 containing SDP information for a session to requestor 302. Requestor 302 then transmits a SIP 'INVITE' message 312 to provider 304. This SIP 'INVITE' message would contain all the normal headers (SDP and other headers) and in addition a QoS specific header containing QoS information, for example as follows:

| |
|---|
| **Invite** sam@francetelecom-ims.net |
| Call-ID : 12345 |
| **Medel-Type : Push** |
| Content- Type : application/sdp |

Provider 304 thus determines that the call is of push model type. Whether downstream authorisation request 314 is successful or not can be determined according to network policy. If the request is successful, provider 304 contacts edge device 306 with a SIP 'INVITE' message 316 requesting the IP address and port number of other entities 308. Edge device 306 then responds with a SIP '200 OK' message 318 with SDP information replaced with the relevant IP address and port number. Provider 304 then responds to requestor 302 with a SIP '200 OK' message 320. Requestor 302 then transmits a SIP 'INVITE' message 322 with SDP information direct to the other entities, which respond with a SIP '183' message indicating that the session is pending.

A similar process then occurs for an upstream authorisation request 328, beginning with requestor 302 transmitting a second SIP 'INVITE' message 326 to provider 304, with corresponding SIP 'INVITE' message 330 and SIP '200 OK' message 332 response between provider 304 and edge device 306, and then SIP '200 OK' message 334 from provider 304 to requestor 302. Requestor 302 then informs endpoint 300 that the session is pending with a SIP '183' message 336.

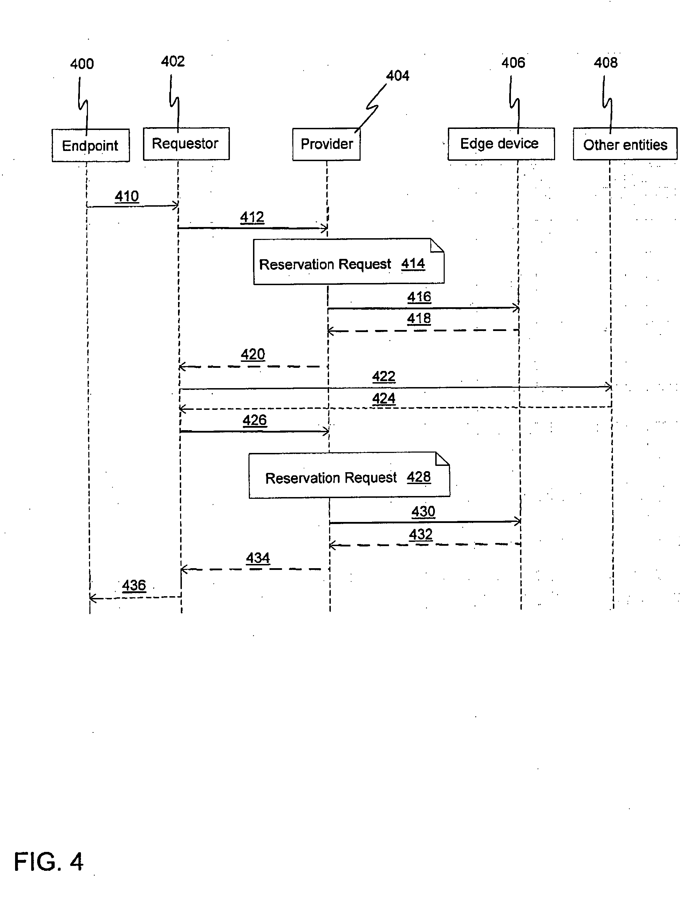

The process continues in Figure 4 with QoS reservation when endpoint 400 transmits a SIP 'PRACK' message 410 containing SDP information to requestor 402. Requestor 402 then transmits a SIP 'UPDATE' message 412 to provider 404. This SIP 'UPDATE' message would contain all the normal headers (SDP and other headers) and in addition a QoS specific header containing QoS information, for example as follows:

| |
|---|
| **Update** sam@francetelecom-ims.net |
| Call-ID : 12345 |
| **Reserve: Enable** |
| Content- Type: application/sdp |

If reservation has to be made in advance, it can be indicated in the SDP information.

Whether downstream reservation request 414 is successful or not is determined according to network resources available for reservation. Provider 404 contacts edge device 406 with a SIP 'UPDATE' message 416 requesting reservation of network resources. If the downstream reservation request 414 is successful, edge device 406 responds with a SIP '200 OK' message 418. Provider 404 then responds to requestor 402 with a SIP '200 OK' message 420 indicating that downstream network resources have been reserved. Requestor 402 then transmits a SIP 'PRACK' message 422 with SDP information direct to the other entities, which respond with a SIP '200 OK' 424 message.

A similar process then occurs for an upstream reservation request 428, beginning with requestor 402 transmitting a second SIP 'UPDATE' message 426 to provider 404, with corresponding SIP 'UPDATE' message 430 and SIP '200 OK' message 432 response between provider 404 and edge device 406, and then SIP '200 OK' message 434 from provider 404 to requestor 402. Requestor 402 then informs endpoint 400 that network resources have been reserved with a SIP '200 OK' message 436.

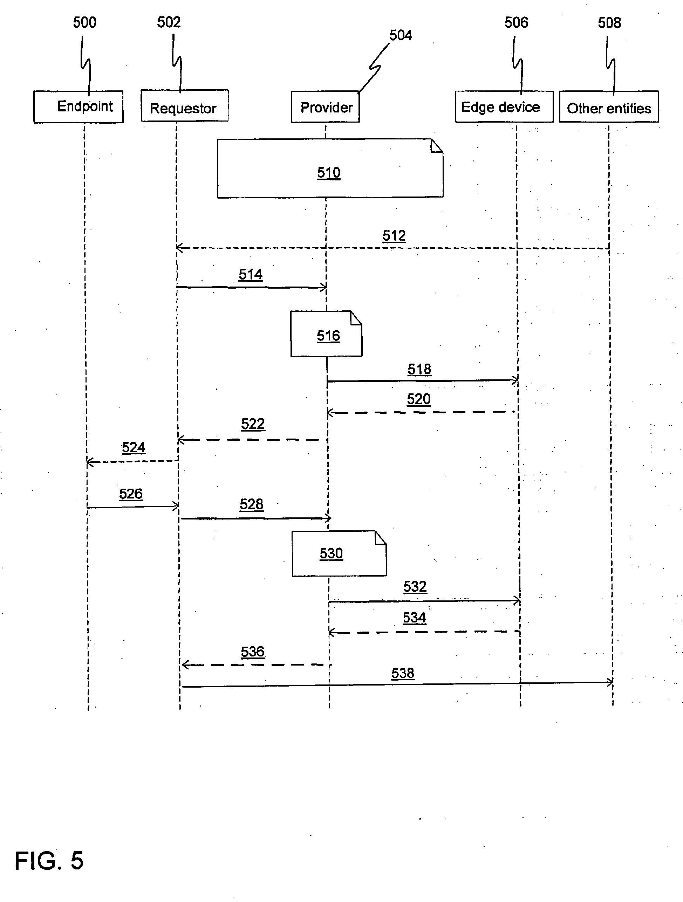

Further SIP message flows which are not shown in the figures may then occur between the endpoint 500, requestor 502, provider 504, edge device 506 and other entities 508 during the ringing phase of the call, as shown by element 510 in Figure 5. These may include SIP '180' Ringing messages and corresponding SIP 'PRACK' and '200 OK' messages. It will be clear to one skilled in the art how such messages flow between which entities.

When the call is answered a SIP '200 OK' message 512 is received at requestor 502. The QoS enablement process 516 then begins with requestor 502 transmitting a SIP 'UPDATE' message 514 to provider 504. Provider 504 then transmits a SIP 'UPDATE' message 518 to edge device 506, which may contain SDP information. This SIP 'UPDATE' message 518 would contain QoS specific header containing QoS information, for example as follows:

| |
|---|
| **Update** sam@francetelecom-ims.net |
| Call-ID : 12345 |
| **Enable : true** |
| Content- Type : application/sdp |

If enabling of the gates is successful, edge device 506 would respond with a SIP '200 OK' message 520. Provider 504 then informs requestor 502 that enabling of the gates was successful by transmitting a SIP '200 OK' message 522. Requestor then informs endpoint 500 of successful enabling of the gates with a further SIP '200 OK' message 524.

When the call is terminated, endpoint 500 transmits a SIP 'BYE' message 526 to requestor 502 to indicate termination of the session. Requestor 502 then transmits a SIP 'BYE' message 528 to provider 504 in order that resources are released when the session is terminated 530. Provider 504 informs edge device 506 that the gates should be closed and resources released with a SIP 'BYE' message which responds with a SIP '200 OK' message. A SIP '200 OK' message is then sent from provider 504 to inform requestor 502 that the session has been terminated and a final SIP 'BYE' message 538 is sent from requestor 502 to other entities 508

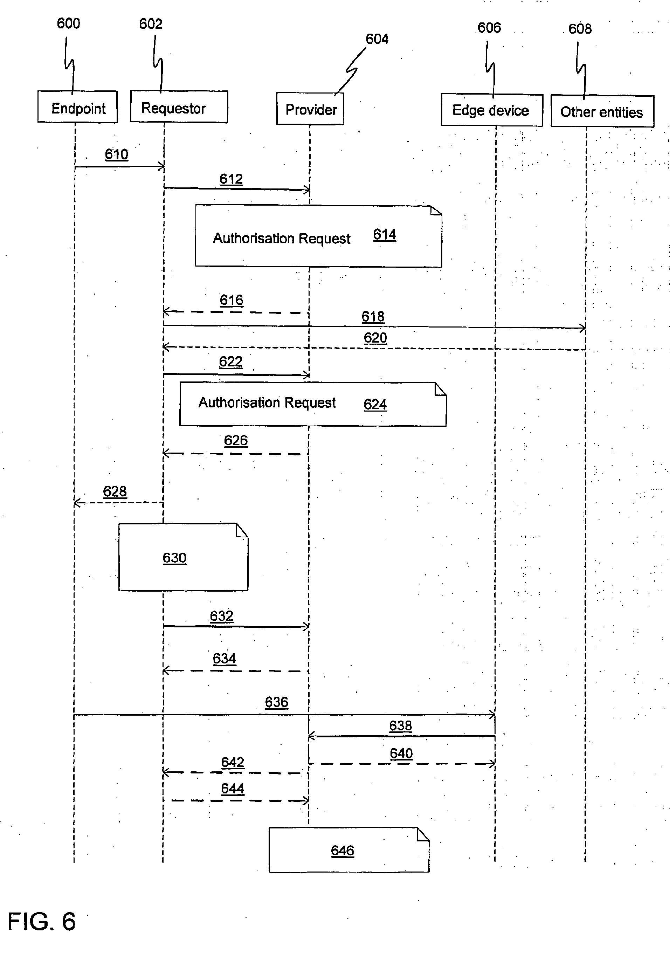

Figure 6 shows example pull model SIP message flows according to an embodiment of the present invention. This approach is suitable for the 3GPP IMS pull model where SIP is used as the call session protocol. In this approach, the provider has the advantage of being able to send a desired QoS policy to an edge device for enforcement. Here the edge device could be a Policy Enforcement Point or Gateway GPRS Support Node (GGSN) in the IMS architecture.

The pull model involves use of an Authorisation token, which can be granted to an endpoint and used for reservation of resources. An example of such an authorisation token is given in RFC 3313, in this case a P-Media-Authorisation token.

The QoS authorisation process begins with endpoint 600 transmitting a SIP 'INVITE' message 610 containing downstream SDP information for a session to requestor 602. Requestor 602 then transmits a SIP 'INVITE' message 612 to provider 604. This SIP 'INVITE' message would contain all the normal headers (SDP and other headers) and in addition a QoS specific header containing QoS information, for example as follows:

| |
|---|
| **Invite** sam@francetelecom-ims.net |
| Call-ID : 54321 |
| **Model-Type: Pull** |
| Content- Type: application/sdp |

If the authorisation request 614 is successful, provider 604 returns a SIP '200 OK' message 616 containing SDP information and a downstream authorisation token. The authorisation token indicates the provider address and a session identifier.

Requestor 602 then transmits a SIP 'INVITE' message 618 containing SDP information to the other entities 608 responsible for the destination endpoint. Requestor 602 then receives a SIP '183' message to indicate that the session is pending.

A similar process then occurs for an upstream authorisation request 624, beginning with requestor 602 transmitting a second SIP 'INVITE' message 622 to provider 604, with corresponding SIP '200 OK' message 626 response containing an upstream authorisation token. Requestor 602 may then inform endpoint 600 that the session is pending by transmitting a SIP '183' message 628 containing SDP information and the authorisation token(s).

It should be noted that a single authorisation token may be requested for both upstream and downstream media.

An optional subscribe process 630 may be then be carried out. Here requestor 602 can ask to be notified about any request made by endpoint 600 for reservation of resources by transmitting a SIP 'SUBSCRIBE' message 632 to provider 604. SIP 'SUBSCRIBE' message 632 would contain a QoS specific header containing QoS information, for example as follows:

| |
|---|
| **Subscribe** sam@francetelecom-ims.net |
| Call-ID: 78906 |
| **Event : resv** |
| Accept: application/resvinfo +xml |

Thus provider 604 determines that requestor 600 is requesting subscription to reservation events. Provider 604 then transmits a SIP '200 OK' message 634 back to requestor 600 indicating that the subscription request was successful.

The reservation process involves endpoint 600 transmitting a SIP 'PRACK' or SIP 'UPDATE message 636 to edge device 606. SIP message 636 contains the authorisation token(s) that endpoint 600 acquired in the authorisation process. Edge device 606 then transmits a SIP 'INVITE' message 638 to provider 604 containing QoS specific reservation header information. Requestor 602 responds to SIP 'INVITE' message 638 with a SIP '200 OK' message 640 informing edge device 606 that reservation was successful. SIP 'INVITE' message 638 is an indication of a QoS authorisation and reservation request. In this case, edge device 606 acts as a requestor of QoS services and provider 604 acts as a provider of QoS services for edge device 606.

Due to the previous request by requestor 602 to be informed of reservation events using SIP 'SUBSCRIBE' message 632, provider 604 transmits a SIP 'NOTIFY' message 642 to requestor 602 which responds with SIP '200 OK' message 644. SIP 'NOTIFY' message 642 indicates to requestor 602 that endpoint 600 has requested reservation. The reservation data could be supplied in extensible Mark-up Language (XML) format, for example embedded in one or more SIP messages.

The subsequent ringing, enable and termination stages are similar to those for the ETSI IMS push model described above with reference to Figure 5.

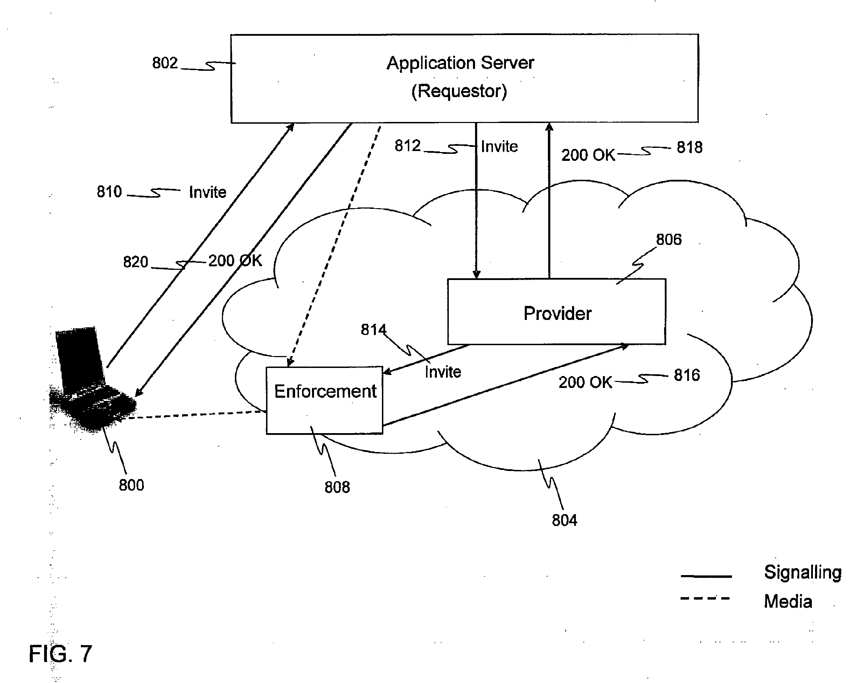

Figure 7 shows an application server architecture view according to an embodiment of the present invention. This embodiment includes an endpoint 800, for example a laptop computer, an application server 802, a provider node 806 and an enforcement node 808 located in network 804.

In this case QoS services are requested by application server 802. The application server could for example provide live football coverage streaming services.

The process starts when endpoint 800 transmits a SIP 'INVITE' message 810 containing SDP information to application server 802 requesting use of its football coverage streaming services. In order to provide guaranteed QoS to endpoint 800, application server 802 requests QoS services from provider node 806. It requests provider node 802 to reserve adequate resources and to open the gates so that media is able to flow to endpoint 800.

This can be done by sending a SIP 'INVITE' message 812 with QoS specific header information, for example reservation header and enable header set to true. Application server 802 may also include model type (in this case push) and type of service (in this case streaming) headers. If there are multiple codecs present in SIP 'INVITE' message 810 and application server 802 knows the codec it would be using, it can optionally remove all the other codecs from the SDP parameters when transmitting SIP 'INVITE' message 812. Alternatively, application server 802 can add a header which includes the desired codec type.

Provider node 806 then sends a SIP 'INVITE' message 814 includes QoS specific header information to enforcement node 808 requesting that adequate resources are reserved for the service.

In response, enforcement node 808 transmits a SIP '200 OK' message 816 back to provider node 806 which in turn sends a SIP '200 OK' message back to provider 806. Application server 802 then transmits a SIP '200 OK' message containing the selected codec as mentioned above back to endpoint 800. Media data can then flow from application server 802 to enforcement node 808 and on to endpoint 800 with enforcement node 808 ensuring the required QoS for the service. When the session is terminated, application server 802 can transmit a SIP 'BYE' message (not shown) to both provider node 806 and endpoint 800.

Figure 1 shows two endpoints located in different access networks connected by a core network. However, the endpoints could equally be located in the same network or in access networks connected directly to each other.

The above description refers to distinct QoS provider and QoS enforcement nodes. In alternative embodiments, QoS provider node and QoS enforcement node could be implemented within a single node.

In alternative embodiments, there may be more than one QoS provider node, QoS requestor node and QoS enforcement node in each network. Further, some or all or their functionality may be combined or shared between nodes. Any of the nodes may be dedicated QoS nodes responsible purely for QoS services, or may also provide session control, call setup and/or any other signalling functionality.

The above embodiments describe an allocated level of QoS. The allocated QoS level may change during a call session, for example if a change of media type occurs and a higher or lower QoS level is required. It will be apparent to one skilled in the art that this can be achieved using the mechanisms of the present invention and will not be described here in detail.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A system for controlling Quality of Service (QoS) in a communications session between two endpoints, said communications session comprising transfer of Session Initiation Protocol (SIP) session control signalling information, said SIP session control signalling information relating to media data to be communicated between said two endpoints, said system including:
a QoS requestor node responsible for requesting QoS services for one of said two endpoints in a communications network through which said media data is to be communicated, said QoS requestor node being arranged to:
transmit QoS information using transfer of SIP signalling information; and
receive using transfer of SIP signalling information, information relating to an allocated QoS level for said media data to be communicated between said two endpoints;
a QoS provider node responsible for controlling QoS services in said communications network, said QoS provider node being arranged to:
receive QoS information using transfer of SIP signalling information;
in response to said reception of said transmitted QoS information, allocate a level of QoS to said media data to be communicated between said two endpoints; and
transmit information relating to said allocated QoS level from said QoS provider node using transfer of SIP signalling information.

2. A system according to claim 1, wherein said QoS provider node is arranged to trigger QoS services, in response to receiving QoS information from said QoS requestor node, using transfer of SIP signalling information.

3. A system according to claim 1 or 2, wherein said QoS requestor node is arranged to transmit QoS signalling information using transfer of SIP signalling information to said QoS provider node and session control signalling information using transfer of SIP signalling information to a different location.

4. A system according to claim 3, wherein said session control signalling information comprises call control signalling information.

5. A system according to any preceding claim, wherein said allocated QoS level comprises one or more of:
a minimum bandwidth,
a minimum latency, and
a minimum error rate,
for said media data to be communicated between said two endpoints.

6. A system according to any preceding claim, wherein either of said two endpoints comprises one or more of:
a mobile telephone,
a personal digital assistant,
an analogue telephone,
a SIP server, and
a personal computer.

7. A system according to any preceding claim, said system is further arranged to, prior to the step of providing QoS information to said QoS provider node, register one or more of said two endpoints and/or said QoS requestor node with said QoS provider node.

8. A system according to any preceding claim, wherein said communications network supports Internet Protocol (IP) based communication.

9. A system according to any preceding claim, wherein said communications network comprises an Internet Protocol Multimedia Subsystem (IMS) architecture.

10. A system according to claim 9, wherein said QoS provider node comprises a Policy Decision Function (PDF) in the IMS architecture.

11. A system according to claim 9 or 10, wherein said QoS requestor node comprises a Control Session Control Function (CSCF) in the IMS architecture.

12. A system according to any preceding claim, wherein said system is adapted to transmit one or more SIP 'INFO' messages during termination of said QoS services.

13. A system according to any preceding claim, wherein said system is adapted to transmit one or more SIP 'BYE' message during termination of said QoS services.

14. A method for controlling Quality of Service (QoS) in a communications session between two endpoints, said communications session comprising transfer of Session Initiation Protocol (SIP) session control signalling information, said SIP session control signalling information relating to media data to be communicated between said two endpoints, said method comprising the steps of:
receiving QoS information at a QoS provider node using transfer of SIP signalling information, said QoS provider node being responsible for controlling QoS services in a communications network through which said media data is to be communicated; and
in response to receiving said QoS information at said QoS provider node, allocating a level of QoS for said media data to be communicated between said two endpoints.

15. A method according to claim 14, wherein said received QoS information comprises a QoS authorisation request, said QoS authorisation request requesting authorisation of network resources for the communication of said media data between said two endpoints, said method further comprising the step of:
in response to receiving said QoS authorisation request at said QoS provider node, transmitting a QoS authorisation response from said QoS provider node indicating whether said QoS authorisation request was successful.

16. A method according to claim 15, wherein said QoS authorisation request comprises a SIP 'INVITE' message or a SIP 'UPDATE' message and said QoS authorisation response comprises a SIP 'OK' message.

17. A method according to any of claims 14 to 16, wherein said received QoS information comprises a QoS reservation request, said QoS reservation request requesting reservation of network resources at said allocated QoS level for the communication of said media data between said two endpoints, said method further comprising the step of:
in response to receiving said QoS reservation request at said QoS provider node, transmitting a QoS reservation response from said QoS provider node indicating whether said QoS reservation request was successful.

18. A method according to claim 17, wherein said QoS reservation request comprises a SIP `INVITE' message or a SIP 'UPDATE' message and said QoS reservation response comprises a SIP 'OK' message.

19. A method according to any of claims 14 to 18, wherein said received QoS information comprises a QoS enable request, said QoS enable request requesting that network resources at said allocated QoS level for the communication of said media data between said two endpoints are enabled, said method further comprising the step of:
in response to receiving said QoS enable request at said QoS provider node, transmitting a QoS enable response from said QoS provider node indicating whether said QoS enable request was successful.

20. A method according to claim 19, wherein said QoS enable request comprises a SIP 'INVITE' message or a SIP 'UPDATE' message and said QoS enable response comprises a SIP 'OK' message.

21. A method according to all of claims 15 to 20, wherein said QoS authorisation request, said QoS reservation request and said QoS enable request comprise a single SIP 'INVITE' message and said QoS authorisation response, said QoS reservation response and said QoS enable response comprise a single SIP 'OK' message.

22. A method according to any of claims 14 to 21, wherein said method comprises transferring Session Description Protocol (SDP) information including at least part of said QoS information.

23. A method according to any of claims 14 to 22, wherein said received QoS information comprises header information in said SIP signalling information.

24. A method according to claim 23, wherein said QoS authorisation, reservation and enable requests comprise said header information.

25. A method according to claim 23 or 24, wherein said header information is not processed by a session control node.

26. A method according to any of claims 14 to 25, further comprising the step of transmitting QoS information using transfer of SIP signalling information from said QoS provider node to a further QoS provider node.

27. A method according to claim 26, wherein said further communications node is located in a further communications network through which said media data is to be communicated, said further QoS provider node being responsible for controlling QoS services in said further communications network.

28. A method according to any of claims 14 to 27, further comprising the step of transmitting QoS information using transfer of SIP signalling information from said QoS provider node to a QoS enforcement node in said network, said QoS enforcement node being responsible for enforcing QoS services in said communications network.

29. A method according to claim 28, further comprising the step of at said QoS enforcement node monitoring media data communicated between said two endpoints according to said allocated QoS level.

30. A method according to any of claims 27 to 29, wherein said communications network comprises an access network and said further communications network comprises a core network connecting a plurality of access networks, said access network being connected via one or more gateways to said core network.

31. A method according to any of claims 27 to 30, wherein said communications network and/or said further communications network comprise, one or more of:
the Internet,
a PSTN, and
a mobile telephony communications network.

32. A method for controlling Quality of Service (QoS) in a communications session between two endpoints, said communications session comprising transfer of Session Initiation Protocol (SIP) session control signalling information, said SIP session control signalling information relating to media data to be communicated between said two endpoints, said method comprising the step of:
transmitting QoS information from a QoS requestor node using transfer of SIP signalling information, said QoS requestor node being responsible for requesting QoS services for one of said two endpoints in a communications network through which said media data is to be communicated; and
receiving at said QoS requestor node using transfer of SIP signalling information, information relating to a level of QoS allocated for said media data to be communicated between said two endpoints.

33. A method according to claim 32, wherein said QoS services are triggered, in response to said transmittal of QoS information from said QoS requestor node, using transfer of SIP signalling information.

34. A method according to claim 32 or 33, wherein said transfer of SIP signalling information comprises transmitting QoS signalling information from said QoS requestor node to a first location and said session control signalling information from said QoS requestor node to a second, different location.

35. A method according to any of claims 32 to 34, wherein said transmitted QoS information comprises a QoS authorisation request, said QoS authorisation request requesting authorisation of network resources for the communication of said media data between said two endpoints, said method further comprising the step of
receiving at said QoS requestor node using transfer of SIP signalling information, a QoS authorisation response indicating whether said QoS authorisation request was successful.

36. A method according to claim 35, wherein said QoS authorisation request comprises a SIP 'INVITE' message or a SIP 'UPDATE' message and said QoS authorisation response comprises a SIP 'OK' message.

37. A method according to claim any of claims 32 to 36, wherein said transmitted QoS information comprises a QoS reservation request, said QoS reservation request requesting reservation of network resources for the communication of said media data between said two endpoints, said method further comprising the step of
receiving at said QoS requestor node using transfer of SIP signalling information, a QoS reservation response indicating whether said QoS reservation request was successful.

38. A method according to claim 37, wherein said QoS reservation request comprises a SIP 'INVITE' message or a SIP 'UPDATE' message and said QoS reservation response comprises a SIP 'OK' message.

39. A method according to any of claims 22 to 38, wherein said transmitted QoS information comprises a QoS enable request, said QoS enable request requesting that network resources for the communication of said media data between said two endpoints at said allocated QoS level are enabled, said method further comprising the step of:
receiving at said QoS requestor node using transfer of SIP signalling information, a QoS enable response indicating whether said QoS enable request was successful.

40. A method according to claim 39, wherein said QoS enable request comprises a SIP 'INVITE' message or a SIP 'UPDATE' message and said QoS enable response comprises a SIP 'OK' message.

41. A method according to all of claims 35 to 40, wherein said QoS authorisation request, said QoS reservation request and said QoS enable request comprise a single SIP 'INVITE' message and said QoS authorisation response, said QoS reservation response and said QoS enable response comprise a single SIP 'OK' message.

42. A method according to any of claims 32 to 41, wherein said method comprises transferring SDP data including at least part of said QoS information.

43. A method according to any of claims 32 to 42, wherein said transmitted QoS information comprises header information.

44. A method according to claim 43, wherein said QoS authorisation, reservation and enable requests comprise said header information.

45. A method according to claim 43 or 44, wherein said header information is not processed by a session control node.

46. A method according to any of claims 32 to 45, wherein said QoS requestor node is a network node remote to said two endpoints.

47. A method according to any of claims 32 to 45, wherein said QoS requestor node comprises one of said two endpoints.

48. Apparatus arranged to conduct the method of any of claims 14 to 47.

49. Computer software arranged to conduct the method of any of claims 14 to 47.
